# EUROPÄISCHE PATENTSCHRIFT

(11) **EP 2 294 368 B1**
(45) Veröffentlichungstag und Bekanntmachung des Hinweises auf die Patenterteilung: **02.01.2019**
(21) Anmeldenummer: 09768876.6
(22) Anmeldetag: 19.05.2009
(51) Int. Cl.: G01F 17/00, G01B 11/24, B67C 3/00, G01N 21/90

(54) **VERFAHREN SOWIE VORRICHTUNG ZUR ERFASSUNG DES KANTENPROFILS VON FLASCHEN ODER DERGLEICHEN BEHÄLTERN**
METHOD AND DEVICE FOR DETECTING THE EDGE PROFILE OF BOTTLES OR SIMILAR CONTAINERS
PROCÉDÉ ET DISPOSITIF POUR DÉTECTER LE PROFIL DE BORD DE BOUTEILLES OU DE RÉCIPIENTS SIMILAIRES

(30) Priorität: 25.06.2008 DE 102008029855
(43) Veröffentlichungstag der Anmeldung: 16.03.2011
(73) Patentinhaber: KHS GmbH, 44143 Dortmund (DE)
(72) Erfinder: BUCHWALD, Carsten, 53498 Bad Breisig (DE); SCHORN, Wolfgang, 53506 Hönningen (DE)
(86) Internationale Anmeldenummer: PCT/EP2009/003537
(87) Internationale Veröffentlichungsnummer: WO 2009/156027

(56) Entgegenhaltungen:
- EP-A1- 0 298 588
- EP-A1- 0 896 244
- EP-A1- 1 176 417
- WO-A2-2008/027569
- DE-A1- 19 512 133
- DE-U1- 20 005 283
- JP-A- 9 089 805
- US-A- 5 280 170
- US-A1- 2002 145 103
- Gottfried Schröder: "5.2. Bildschirme" In: "Technische Optik : Grundlagen und Anwendungen", 1990, Vogel, Würzburg, XP55355874, ISBN: 978-3-8023-0067-7 pages 104-106,

## Beschreibung

Die Erfindung bezieht sich auf ein Verfahren gemäß Oberbegriff Patentanspruch 1 sowie auf eine Vorrichtung gemäß Oberbegriff Patentanspruch 4.

Verfahren und Vorrichtungen bzw. Abbildungs- oder Messsysteme zum Abbilden von Flaschen oder dergleichen Behältern, insbesondere auch zur Erfassung des Kantenprofils von Behältern, bei denen die Behälter auf einem Transporteur oder Transportband an einem Aufnahme- oder Messbereich des Aufnahme- oder Messsystems vorbei bewegt werden, sind bekannt. Die bekannten Messsysteme, bei denen mittels einer CCD-Kamera mit entozentrischem Objektiv und mittels eines Leuchtschirm unterschiedlichste Messverfahren im sogenannten Durchlicht- oder Schattenabbildungs-Verfahren realisiert werden (JP 0908905 A), sind aber insbesondere wegen eines nicht verzerrungsfreien Strahlenganges mit starken Abbildungsfehlern behaftet. Diese Abbildungsfehler könnten zwar mit speziellen Objektiven, beispielsweise mit telezentrischen Objektiven auf ein in der Praxis vertretbares Maß reduziert werden, derartige Objektive sind aber extrem teuer und besitzen auch eine stark reduzierte Tiefenschärfe, die eine sehr exakte Positionierung der Behälter an dem jeweiligen Mess- und Aufnahmebereich des Messsystems erforderlich macht.

Bekannt sind insbesondere auch Verfahren und Vorrichtungen zur Erfassung des Kantenprofils von Flaschen oder dergleichen Behältern mit den Merkmalen des Oberbegriffs des Patentanspruchs 1 bzw. des Patentanspruches 4 (EP 0 298 588 A1, US 5 280 170 A), bei denen mit Hilfe eines parallelen Lichtes einer Lichtquelle auf einem Bildschirm ein Schattenbild des jeweiligen Behälters erzeugt und dieses Schattenbild dann mit Hilfe eines optoelektrischen Empfängers oder einer optoelektrischen Kamera für eine weitere Verarbeitung aufgenommen wird.

Bekannt sind weiterhin ein Verfahren sowie eine Vorrichtung zur Inspektion von Behältern, die durch Blasformen aus Kunststoff hergestellt sind. Auf einer Seite einer Transportstrecke für die mit ihrer Behälterachse vertikal orientierten Behälter ist in einer vertikalen Reihe eine Vielzahl von Lichtaussendenden Emittern vorgesehen. Jedem Emitter ist auf der anderen Seite der Transportstrecke in einer horizontalen Achsrichtung gegenüberliegend ein Fotodetektor zugeordnet. Die Inspektion der Behälter erfolgt mit variablem Lichtspektrum. Hierfür sind Emitter für die Aussendung von Licht in unterschiedlichem Lichtspektrum ausgebildet.

Bekannt ist weiterhin eine als Gabellichtschranke gebildete Einrichtung, die im Wesentlichen aus einem Lichtemittierenden Sensor an einem Gabelarm und aus einem optoelektrischen Lichtdetektor an einem gegenüberliegenden Gabelarm der Vorrichtung besteht. Der Detektor ist vorzugsweise ein Ortsauflösender Detektor in Form einer CCD-Zeile. Zur Ausfilterung von Fremd- oder Streulicht ist vor dem optoelektrischen Empfänger ein Filter vorgesehen, welches schräg einfallendes Fremdlicht ausfiltert.

Aufgabe der Erfindung ist es, ein Verfahren aufzuzeigen, welches eine verzerrungsfreie oder im Wesentlichen verzerrungsfreie Erfassung des Kantenprofils von Flaschen oder dergleichen Behältern ermöglicht, und zwar bei reduziertem konstruktiven Aufwand für die als Mess- und Abbildungssystem verwendete Vorrichtung.

Zur Lösung dieser Aufgabe ist ein Verfahren entsprechend dem Patentanspruch 1 ausgebildet. Eine Vorrichtung zum Durchführen des Verfahrens ist Gegenstand des Patentanspruchs 4.

Bei einer nicht erfindungsgemäßen Ausführungsform werden mit einem Zeilenbildaufnehmer bzw. mit einer Zeilenkamera von jedem an dem Mess- oder Aufnahmebereich vorbei bewegten Behälter jeweils zeitlich nacheinander mehrere zeilen- oder streifenförmige Aufnahmen erzeugt, aus denen dann das Kantenprofil des betreffenden Behälter zusammengesetzt wird. Die Zeilenaufnahmen sind dabei verzerrungsfrei und vorzugsweise Aufnahmen ohne Grau- und Farbanteil.

Bei der genannten Verwendung eines Zeilenbildaufnehmers bzw. einer Zeilenkamera werden Zeilenbilder beispielsweise parallel zu einer Behälterachse, z.B. parallel zu einer vertikalen Behälterachse erzeugt, wobei das Auflösevermögen im erzeugten Kantenprofil in dieser Behälterachse durch das Auflösevermögen des Zeilenbildaufnehmers bzw. der Zeilenkamera und quer zur Achse der Zeilenbilder, d.h. z.B. quer zur Behälterachse durch die Anzahl der Aufnahmen je Zeiteinheit den jeweiligen Erfordernissen angepasst werden kann.

Die einzelnen Zeilenbilder werden beispielsweise durch entsprechende Ansteuerung des Zeilenbildaufnehmers oder der Zeilenkamera und/oder durch entsprechende Ansteuerung der Licht aussenden Einrichtung erzeugt. Das von den Behältern jeweils erstellte Kantenprofil kann für die unterschiedlichsten Steuer- und Überwachungszwecke verwendet werden.

Bei der Erfindung erfolgt mit dem parallelen Licht der wenigstens einen Licht aussendenden Einrichtung eine parallele Schattenabbildung des jeweiligen Behälters auf einem Leucht- oder Bildschirm. Dieser ist so ausgebildet, dass an seiner dem wenigstens opto-elektrischen Empfänger (z.B. CCD-Kamera) zugewandten Seite eine Abbildung oder ein Schattenbild des jeweiligen Behälters vorliegt, welches ausschließlich durch das parallele Licht bzw. die parallelen Lichtstrahlen dieses Lichtes erzeugt ist. Hierdurch wird eine verzerrungsfreie und scharfrandige Schattenabbildung auf der dem wenigstens einen opto-elektrischen Empfänger zugewandten Seite des Leucht- oder Bildschirmes erreicht. Insbesondere sind Verzerrungen durch nicht parallele Lichtstrahlen sowie durch Fremdlicht vermieden, welches schräg auf den Leucht- oder Bildschirm auftrifft. Der Bildschirm besteht dabei im einfachsten Fall aus einem Flachmaterial oder aus einer Folie, die nur oder im Wesentlichen nur für ein senkrecht auftreffendes Licht durchlässig ist, beispielsweise aus einer Polfilterfolie oder Richtfilterfolie.

Die wesentlichen Vorteile der Erfindung lassen sich wie folgt zusammenfassen: Vereinfachter und kostengünstiger Aufbau der Vorrichtung bzw. des Mess- und/oder Abbildungssystems,
▪ die Möglichkeit einer Verwendung von handelsüblichen und preiswert auf dem Markt erhältlichen entozentrischer Objektive für den verwendeten optoelektrischen Empfänger bzw. die CCD-Kamera,
▪ die Möglichkeit extrem kurzer Belichtungszeiten durch eine gezielte Fokussierung des Lichtes bzw. Lichtstrahles und dadurch u.a. auch eine Verbesserung der Fremdlichtunabhängigkeit,
▪ verzerrungsfreie Abbildung,
▪ homogene Leuchtdichte auch bei Verwendung von nur schwachen Lichtquellen,
▪ hohe Tiefenschärfe, insbesondere auch bei Verwendung eines optoelektrischen Empfängers bzw. einer CCD-Kamera mit entozentrischem Objektiv.

Weiterbildungen, Vorteile und Anwendungsmöglichkeiten der Erfindung ergeben sich auch aus der nachfolgenden Beschreibung von Ausführungsbeispielen und aus den Figuren.

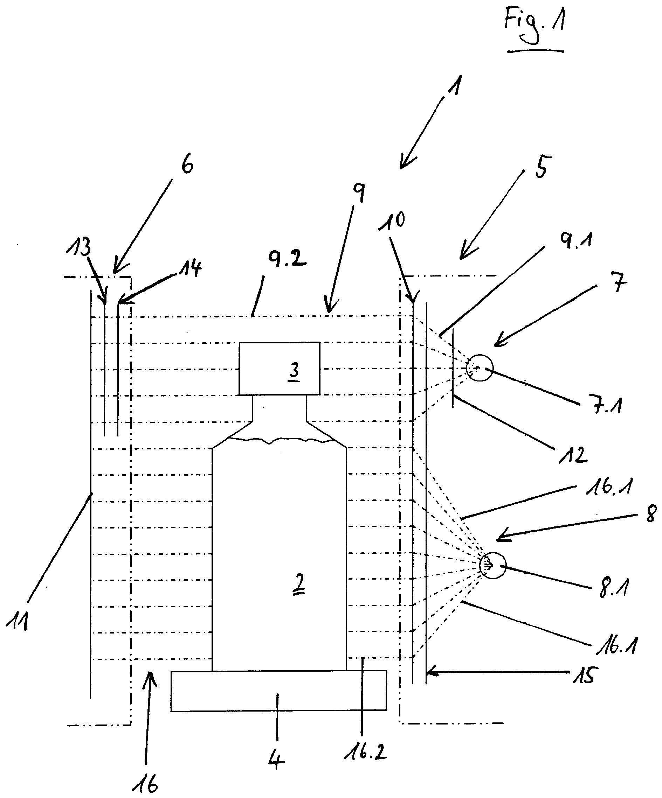

Die Erfindung wird im Folgenden anhand der Figuren 1 - 4, die jeweils in vereinfachter schematischer Darstellungen opto-elektrische Abbildungs- oder Messvorrichtungen gemäß der Erfindung bzw. eine Einrichtung zum Einkoppeln mehrerer Einzellichtquellen in einen gemeinsamen Brennpunkt zeigen, näher erläutert. Dabei zeigt
Figur 1 eine Vorrichtung zur opto-elektrische Erfassung bzw. zum Aufnehmen des Kantenprofils von Behältern,
Figur 2 als einzige erfindungsgemäße Ausführungsform eine Licht aussendenden Einrichtungen, mit einer oder mehreren LEDs gebildeten punktförmigen oder wesentlichen punktförmigen Lichtquellen,
Figur 3 in vereinfachter schematischer Darstellung ähnlich Figur 1 eine Vorrichtung und
Figur 4 in sehr schematischer Darstellung eine weitere optische Anordnung, bei welcher Einzellichtquellen zu einer im Brennpunkt des optischen Linsensystems angeordneten Lichtquelle zusammengefasst sind.

Die in der Figur 1 allgemein mit 1 bezeichnete Vorrichtung dient u.a. zur opto-elektrische Erfassung bzw. zum Aufnehmen des Kantenprofils von Behältern 2, die mit einem Füllgut gefüllt und jeweils mit einem Verschluss 3 verschlossen sind, beispielsweise zur Ermittlung des tatsächlichen Volumens der Behälter 2 in einer Recheneinheit aus dem Kantenprofil, so dass unter Berücksichtigung dieses Volumens bei entsprechender Verknüpfung mit einer Füllstanz- oder Füllhöhenkontrolle ermittelt oder überprüft werden kann, ob die gemessene Füllhöhe auch tatsächlich dem geforderten Volumen entspricht usw. Die Vorrichtung 1 eignet sich weiterhin u.a. auch für eine Kontrolle der Behälter 2 hinsichtlich des Vorhandenseins der Verschlüsse 3 und/oder hinsichtlich eines ordnungsgemäßen Aufbringens dieser Verschlüsse.

Grundsätzlich besteht die Vorrichtung 1, durch die bzw. durch deren Mess- und/oder Aufnahmebereich die als Flaschen, beispielsweise als PET-Flaschen ausgebildeten Behälter 2 auf einem Transporteur oder Transportband 4 aufrecht stehend, d.h. mit ihrer Behälterachse in vertikaler Richtung orientiert hindurchbewegt werden, aus einem Mess- und/oder Aufnahmesystem mit einer Sendeseite 5, die an einer Längsseite des Transportbandes 4 mit diesem nicht mitbewegt vorgesehen ist, und mit einer Empfängerseite 6. Diese ist der Sendeseite 5 senkrecht oder quer zur Transportrichtung des Transportbandes 4 gegenüberliegend an der anderen Längsseite dieses Transportbandes bzw. des Mess- und/oder Aufnahmebereichs vorgesehen, und zwar mit dem Transportband 4 ebenfalls nicht mitbewegt.

Bei der dargestellten Ausführungsform weist die Sendeseite 5 in vertikaler Richtung übereinander zwei Licht aussendende Einrichtungen 7 und 8 auf, von denen die Licht aussendende Einrichtung 7 bei der dargestellten Ausführungsform von einer einzigen, punktförmigen oder im Wesentlichen punktförmigen Lichtquelle 7.1 mit einem vorgegebenen Lichtspektrum und die Licht aussendende Einrichtung 8 von einer punktförmigen oder im Wesentlichen punktförmigen Lichtquelle 8.1 gebildet ist, die zur Abgabe von Licht in unterschiedlichen Spektren geeignet ist. Die Lichtquelle 8.1 ist hierfür von mehreren Einzellichtquellen mit einer zugehörigen Optik zur Lichteinkopplung gebildet. Die Lichtquelle 7.1 und die Einzellichtquellen der Lichtquelle 8.1 bestehen beispielsweise jeweils aus einer LED oder aus mehreren LEDs.

Das Licht der Lichtquelle 7.1 ist in der Figur 1 allgemein mit 9 bezeichnet. Das zunächst divergierend von der Lichtquelle 7.1 abgestrahlte Licht 9.1 (Lichtbündel aus divergierenden Lichtstrahlen) wird an einem als Kollimator wirkenden optischen Linsenssystem 10 in horizontales und senkrecht zur Transportrichtung des Transportbandes 4 orientiertes paralleles Licht 9.2 (Lichtbündel aus parallelen Lichtstrahlen) umgeformt und trifft in dieser Form auf die Empfängerseite 6. In der Empfängerseite 6 wird das von dem parallelen Licht 9.2 als paralleles Schattenbild oder -profil erzeugte Kantenprofil des jeweiligen Behälters 2 im Bereich des Verschlusses 3 von einem in der Figur 1 allgemein mit 11 bezeichneten opto-elektrischen Empfänger erfasst, der z.B. eine Zeilenkamera mit entozentrischer Optik aufweist. Dies erfolgt durch mehrere zeitlich auf einander folgende Aufnahmen jeweils eines in vertikaler Richtung orientierten und beispielsweise nur ein Pixel breiten Zeilenbildes des oberen, den Verschluss 3 aufweisenden Bereichs des durch die Vorrichtung 1 bewegten Behälters 2. Durch Zusammen- oder Aneinander-Setzen dieser Zeilenbilder ohne Grau- und Farbwerte wird das Kantenprofil des jeweiligen Behälters 2 im Bereich des Verschlusses 3 erzeugt, und zwar unter Berücksichtigung der Transportgeschwindigkeit des Transportbandes 4. Es versteht sich, dass die Licht aussendende Einrichtung 7 hierfür so angeordnet ist, dass sich die Behälter 2 mit ihren Verschlüssen 3 durch das parallele Licht 9.2 bewegen.

Zwischen der Lichtquelle 7.1 und dem Linsenssystem 10 ist im Strahlengang des Lichtes 9 ein vorzugsweise austauschbares Filter 12 vorgesehen, um für die Erfassung des Kantenprofils ein beispielsweise auch unter Berücksichtigung von Umgebungslicht optimales Teilspektrum des von der Lichtquelle 7.1 gelieferten Lichts 9 auswählen zu können. Entsprechende Filter 13 und 14 sind an der Empfängerseite 6 vor dem opto-elektrischen Empfänger 11 vorgesehen. Im Strahlengang zwischen dem Filter 12 und dem Linsensystem 10 ist weiterhin eine Feldblende 15 mit Blendenöffnung angeordnet, die das Licht der Lichtquelle 7.1 derart begrenzt, dass mit dem aus dem Linsensystem 10 austretenden parallelen Licht 9.2 lediglich der obere, mit dem Verschluss 3 versehene Bereich jedes Behälters 2, d.h. der jeweilige Flaschenhals mit dem Verschluss 3 erfasst wird.

Das Licht der Lichtquelle 8.1 ist in der Figur 1 allgemein mit 16 bezeichnet. Das zunächst divergierend von der Lichtquelle 8.1 abgestrahlte Licht 16.1 wird an dem als Kollimator wirkenden optischen Linsenssystem 10 in horizontales und senkrecht zur Transportrichtung des Transportbandes 4 orientiertes Licht 16.2 umgeformt und trifft in dieser Form auf die Empfängerseite 6. In der Empfängerseite 6 wird das von dem parallelen Licht 16.2 als paralleles Schattenbild oder -profil erzeugte Kantenprofil des jeweiligen Behälters 2 im Bereich unterhalb des Verschlusses 3 von dem opto-elektrischen Empfänger 11 erfasst. Dies erfolgt ebenfalls durch mehrere zeitlich auf einander folgende Aufnahmen jeweils eines in vertikaler Richtung orientierten und beispielsweise nur ein Pixel breiten Zeilenbildes des Behälterbereichs unterhalb des Verschlusses 3. Durch Zusammen- oder Aneinandersetzen dieser Zeilenbilder ohne Grau- und Farbwerte wird für den jeweiligen Behälters 2 das Kantenprofil unterhalb des Verschlusses 3 erzeugt, und zwar unter Berücksichtigung der Transportgeschwindigkeit des Transportbandes 4. Es versteht sich, dass die Lichtquelle 8.1 hierfür unterhalb oder auf einem Niveau unterhalb der Lichtquelle 7.1 so angeordnet ist, dass die Behälter 2 mit ihrem Behälterbereich unterhalb der Verschlüssen 3 durch das parallele Licht 16.2 bewegt werden.

Auch im Strahlengang des parallelen Lichtes 16.2 sind vor dem optoelektrischen Empfänger 11 nicht dargestellte den Filtern 12 und 13 entsprechende, wechselbare Filter vorgesehen, die hinsichtlich ihrer Durchlasscharakteristik an das Spektrum des von der Lichtquelle 8.1 ausgesendeten Lichtes 16 angepasst sind, und zwar derart, dass synchron mit der Änderung des Lichtspektrums der Lichtquelle 8.1 auch die empfängerseitigen Filter angepasst geändert bzw. gewechselt werden. Hierbei besteht insbesondere die Möglichkeit, zur weiteren Verbesserung der Erfassung des Kantenprofils der Behälter 2 durch synchronisiertes Ändern des Lichtspektrums der Lichtquelle 8.1 und der empfängerseitigen Filter Zeilenbilder von dem jeweiligen Behälter 2 mit unterschiedlichen Lichtspektren zu erzeugen.

Die in der Feldblende 15 bzw. die dort vorgesehene Blendenöffnung ist wiederum so ausgeführt, dass mit dem parallelen Licht 16.2 die Behälter 2 im Wesentlichen nur in einem Bereich unterhalb des Verschlusses 3 erfasst werden.

Als Linsensystem 10 eignen sich grundsätzlich alle optischen Linsen oder Linsensysteme, die als Kollimator bzw. zum Umwandeln eines divergierenden Lichtstrahles in paralleles Licht geeignet sind. Aus Kostengründen ist das Linsensystem 10 beispielsweise von einer Fresnel-Linse gebildet.

Vorstehend wurde davon ausgegangen, dass der opto-elektrische Empfänger 11 wenigstens eine Zeilenkamera mit einer preiswerten entozentrischen Optik aufweist und mit dieser Zeilenkamera dann von der Schattenkontur der Behälter 2 Zeilenbilder ohne Farb- und Grauwerte aufgenommen und dann durch Aneinandersetzen dieser Bilder die Behälterkonturen im Bereich des Verschlusses sowie unterhalb des Verschlusses erzeugt werden. Grundsätzlich besteht aber auch die Möglichkeit, anstelle einer Zeilenkamera einen anderen opto-elektrischen Empfänger 11, z.B. CCD-Kamera mit entozentrischem Objektiv usw. vorzusehen.

Bei einer bevorzugten Variante wird eine Zeilenkamera eingesetzt, die keinerlei entsprechende Optik aufweist, sondern nur den reinen Aufnehmer umfasst.

Weiterhin wurde vorstehend der einfacheren Darstellung wegen davon ausgegangen, dass das Linsensystem 10 sowie die Feldblende 15 für beide Licht aussendende Einrichtungen 7 und 8 gemeinsam vorgesehen sind. Selbstverständlich können für die Einrichtungen 7 und 8 auch eigenständige Linsensysteme 10 und/oder Feldblenden 15 verwendet sein.

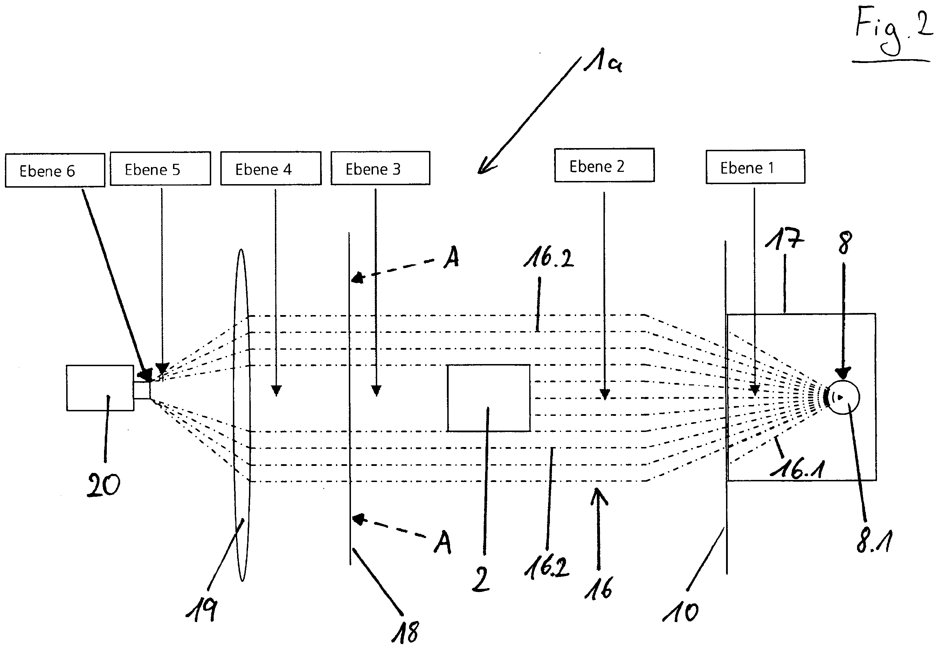

Die Figur 2 zeigt in vereinfachter Darstellung und in Draufsicht eine Vorrichtung 1a, die sich von der Vorrichtung 1 in einigen Details unterscheidet, vom Mess- und Abbildungsprinzip und der Verwendung her aber grundsätzlich mit der Vorrichtung 1 übereinstimmt. Dargestellt ist in der Figur 2 eine der beiden Licht aussendenden Einrichtungen, beispielsweise die Einrichtung 8 mit der wiederum von einer oder mehreren LEDs gebildeten punktförmigen oder wesentlichen punktförmigen Lichtquelle 8.1, die in einem Tubus 17 mit mechanischer Blende angeordnet ist und die ihr Licht 16 zunächst als divergierendes Licht 9.1 (Lichtbündel aus divergierenden Lichtstrahlen) abstrahlt. An dem als Kollimator wirkenden und beispielsweise von einer Fresnel-Linse gebildeten Linsensystem 10 wird das divergierende Licht 16.1 in paralleles Licht 16.2 (Lichtbündel aus parallelen Lichtstrahlen) umgewandelt, durch das (paralleles Licht) das jeweilige Messobjekt, d.h. der jeweilige Behälter 2 mit dem Transporteur 4 hindurchbewegt wird.

Die Lichtquelle 8.1, der Tubus 17 und das Linsensystem 10 sind wiederum Teil der Sendeseite 5 des Mess- und/oder Abbildungssystems. Der Sendeseite 5 gegenüberliegend ist auf der Empfängerseite 6 ein Leucht- oder Bildschirm 18 vorgesehen, auf dem mit dem parallelen Licht 16.2 das von dem Messobjekt bzw. dem Behälter 2 erzeugte parallele Schattenbild verzerrungsfrei abgebildet wird. Über eine im Strahlengang auf den Bildschirm 18 folgendes optisches System 19, beispielsweise in Form einer Plano-Convex-Linse, und über die Optik, z.B. das entozentrische Objektiv eines opto-elektrischen Sensors, beispielsweise einer Zeilenkamera oder einer CCD-Kamera, wird das am Bildschirm 18 erzeugte Schattenbild aufgenommen. Dies erfolgt wiederum bevorzugt ohne Farb- und Grauanteile, z.B. in Form von Zeilenbildern, aus denen dann das Kantenprofil des Messobjektes bzw. Behälters 2 zusammengesetzt wird.

Der Bildschirm 18 ist bevorzugt so ausgeführt, dass er nur das parallele Licht 16.2, d.h. senkrecht auftreffende Lichtstrahlen durchlässt, nicht aber schräg einfallendes Licht, insbesondere auch nicht schräg einfallendes Umgebungs- oder Fremdlicht, welches in der Figur 2 mit den Pfeilen A angedeutet ist. Hierdurch wird die verzerrungsfreie und scharfe Darstellung des Kantenprofils auf dem Bildschirm 18 wesentlich verbessert. Insbesondere sind auch Verzerrungen durch Fremdlicht wirksam vermieden. Als Material für den Bildschirm 18 eignet sich beispielsweise eine Polfilterfolie oder Richtfilterfolie.

Es versteht sich, dass das Linsensystem 10 bzw. die dieses Linsensystem bildenden und als Kollimator wirkenden Linsen für die Lichtquelle 7.1 und 7.2 jeweils gesondert vorgesehen sind, um so durch die Anordnung dieser Lichtquellen im Brennpunkt das divergierende Licht 9.1 bzw. 16.1 jeweils in das parallele Licht 9.2 und 16.2 umzuformen.

Je nach Ausführung und/oder Anwendung können die Filter 13, 14 und 15 variieren, insbesondere auch hinsichtlich ihrer Filterwirkung oder -charakteristik und/oder es ist auch möglich, auf diese Filter komplett oder teilweise zu verzichten.

Unter Bezugnahme auf die Figur 2 kann die optische Ausbildung des Mess- und Abbildungssystems der Vorrichtung 1a und deren Funktionsweise zusammenfassend auch wie folgt beschrieben werden:
Die punktförmige Lichtquelle 8.1 erzeugt eine Leuchtfläche mit entozentrischem Verlauf;
der Tubus 17 mit mechanischer Blende zentriert die punktförmige Lichtquelle 8.1 (optische Ebene 1);
das Linsensystem 10 (z.B. Fresnel-Linse) erzeugt aus dem divergierenden Licht 16.1 das parallele Licht 16.2 (optische Ebene 2);
das zu messende Objekt, beispielsweise Behälter 2 wirft einen verzerrungsfreien Schatten auf den Bildschirm 18 (optische Ebene 3);
die parallele Abbildung auf dem Bildschirm 18 (optische Ebene 4) wird über das Linsensystem 19 fokussiert (optische Ebene 5) und anschließend mit der Zeilenkamera oder CCD-Kamera aufgenommen (optische Ebene 6).

Auch bei der Messvorrichtung 1a sind wiederum verschiedene Änderungen möglich. So ist beispielsweise lediglich bei Verwendung einer CCD-Kamera 20 als opto-elektrischer Empfänger das Linsensystem 19, d.h. die Plano-Konvex-Linse erforderlich, während bei Verwendung eines Zeilenbildaufnehmers als opto-elektrischer Empfänger 20 die Plano-Konvex-Linse 19 nicht benötigt wird. Die Filter 12, 13 und 14 können je nach Ausführung und/oder Anwendung variieren und/oder vollständig oder teilweise entfallen.

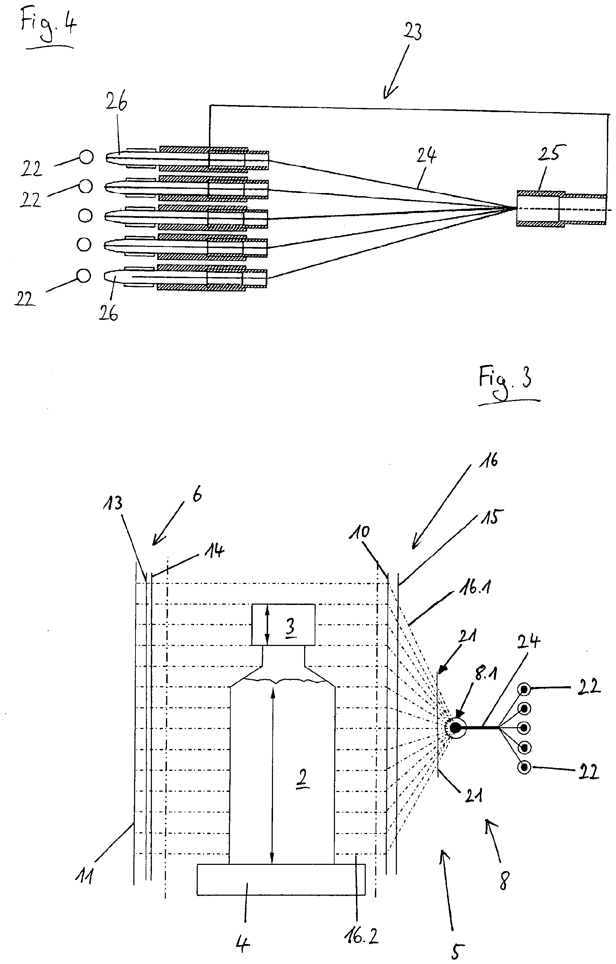

Die Figur 3 zeigt in vereinfachter schematischer Darstellung ähnlich Figur 1 eine Vorrichtung 1b, die sich von der Vorrichtung 1 in einigen Details unterscheidet, vom Mess- und Abbildungsprinzip und der Verwendung her aber grundsätzlich mit der Vorrichtung 1 übereinstimmt. Der wesentliche Unterschied der Vorrichtung 1b gegen über Vorrichtung 1 besteht darin, dass auf der Sendeseite 5 nur eine einzige Licht aussende Einrichtung, nämlich z.B. die in der Figur 3 mit 8 bezeichnete Licht aussendende Einrichtung mit der Lichtquelle 8.1 vorgesehen ist, die im Brennpunkt des als Kolimator wirkenden Linsensystems 10 mit Feldblende 15 angeordnet ist, so dass das divergierende Licht 16.1 wiederum in das parallele oder im Wesentlichen parallele Licht 16.2 umgewandelt wird, und zwar in der Weise, dass mit dem Licht 16.2 der jeweilige Behälter 2 über seine gesamte Höhe, d.h. einschließlich des Behälterverschlusses 3 erfasst wird. Zwischen der Feldblende 15 und der Lichtquelle 8.1 ist weiterhin ein dem Filter 12 entsprechendes Filter 21 vorgesehen.

Die Empfängerseite 6 ist in gleicher oder ähnlicher Weise wie die Empfängerseite 6 der Messvorrichtung 1 ausgebildet, und zwar beispielsweise wiederum mit den im Strahlengang des parallelen Lichtes 16.2 angeordneten Filtern 13 und 14 und dem nachgeschalteten opto-elektrischen Empfänger 11.

Wie in der Figur 3 auch dargestellt, wird die Lichtquelle 8.1 von einer Vielzahl von Licht emittierenden Elementen oder Einzellichtquellen 22 gebildet, die beispielsweise wiederum LEDs und beispielsweise zumindest teilweise individuell ansteuerbar sind, um so u.a. einerseits durch den parallelen Betrieb mehrerer Einzellichtquellen 22 die erforderliche Lichtstärke zu erreichen und andererseits durch Umschalten von Einzellichtquellen 22 mit unterschiedlichem Lichtspektrum das Spektrum des von der Lichtquelle 8.1 abgegebenen Lichtes ändern zu können, beispielsweise zur Optimierung der jeweiligen Abbildung und/oder Messung. Hierfür bilden die Einzellichtquellen 22 beispielsweise Gruppen von Einzellichtquellen 22 mit jeweils unterschiedlichem Lichtspektrum, wobei jede Gruppe wenigstens eine Einzellichtquelle 22, bevorzugt aber mehrere Einzellichtquellen aufweist.

Es versteht sich, dass auch bei der in der Figur 3 dargestellten Messvorrichtung 1b wiederum verschiedene Abwandlungen möglich sind. So können die Filter 13, 14 und 21 je nach Ausführung und/oder Anwendung variieren oder komplett oder teilweise entfallen. Weiterhin kann das als Kollimator wirkende Linsensystem 10 aus einer oder aber auch aus mehreren Linsen bestehen.

Die Figur 4 zeigt in sehr schematischer Darstellung eine optische Anordnung, mit der die Einzellichtquellen 22 zu der im Brennpunkt des optischen Linsensystems 10 angeordneten Lichtquelle 8.1 zusammengefasst sind. Die optische Anordnung besteht bei der dargestellten Ausführungsform im Wesentlichen aus einer Faseroptik 23 mit mehreren Lichtwellenleitern 24, die mit ihrem Licht aussendenden Ende in einer Endhülse 25 zu einem Bündel zusammengefasst die Lichtquelle 8.1 bilden. An dem der Endhülse 25 entfernt liegenden Ende ist jeder Lichtwellenleiter 24 mit einem Anschluss 26, beispielsweise mit einer Lichtleiteroptik zum Einkoppeln des Lichtes der betreffenden Einzellichtquelle 22 versehen. Die Lichtleiteroptik ermöglicht insbesondere Licht mit unterschiedlichen Wellenlängen einzukoppeln oder auch zu wählen, um spezielle Inspektionsaufgaben zu erfüllen. Hier sei insbesondere die Einkoppelung von Licht im Infrarotbereich genannt.

Selbstverständlich können anstelle der Faseroptik 23 auch andere optische Einrichtungen verwendet werden, um das Licht mehrerer Einzellichtquellen 22 zu der im Fokus des Linsensystems 10 angeordneten Lichtquelle 7.1 bzw. 8.1 zusammen zu fassen bzw. das Licht mehrerer Einzellichtquellen 22 in den Brennpunkt des Linsensystems 10 einzukoppeln, beispielsweise optische Systeme mit Prismen oder prismenartig wirkenden optischen Elementen.

In gleicher Weise wie die Lichtquelle 8.1 ist beispielsweise auch die punktförmige Lichtquelle 7.1 der Messvorrichtung 1 ausgebildet, sofern diese Lichtquelle 7.1 ebenfalls aus mehreren Einzellichtquellen, beispielsweise aus mehreren LEDs besteht.

Die Erfindung wurde voranstehend an Ausführungsbeispielen beschrieben. Es versteht sich, dass Änderungen sowie Abwandlungen möglich sind.

### Bezugszeichenliste

- 1, 1a: Messvorrichtung
- 2: Behälter
- 3: Behälterverschluss
- 4: Transportband
- 5: Sendeseite
- 6: Empfängerseite
- 7, 8: lichtaussendende Einrichtung
- 7.1, 8.1: Lichtquelle
- 9: Licht der Lichtquelle 1
- 9.1: divergierendes Licht
- 9.2: paralleles Licht
- 10: Linsensystem
- 11: opto-elektrischer Empfänger
- 12, 13, 14: Filter
- 15: Feldblende
- 16: Licht der Lichtquelle 8.1
- 16.1: divergierendes Licht
- 16.2: paralleles Licht
- 17: Tubus
- 18: Lichtschirm
- 19: Linsensystem, beispielsweise Plano-Convex-Linse
- 20: Zeilenkamera oder CCD-Kamera mit entozentrischem Objektiv
- 21: Filter
- 22: Einzellichtquellen
- 23: Faseroptik
- 24: Lichtwellenleiter
- 25: Endhülse
- 26: optischer Anschluss
- A: Fremdlicht

## Patentansprüche

1. Verfahren zur Erfassung des Kantenprofils von Flaschen oder dergleichen Behältern (2), die an einem Mess- und/oder Aufnahmebereich (4) eines Mess- und/oder Aufnahmesystems vorbei bewegt werden, unter Verwendung wenigstens eines opto-elektrischen Empfängers (11, 20) an einer Seite des Mess- und/oder Aufnahmebereichs (4) und unter Verwendung wenigstens einer, dem Empfänger (11) an dem Mess- und/oder Aufnahmebereich (4) gegenüberliegenden Licht aussendenden Einrichtung (7, 8) mit wenigstens einer Lichtquelle (7.1, 8.1) zur Abgabe eines im Spektrum veränderbaren Lichtes (9, 16), wobei
die wenigstens eine Licht aussendende Einrichtung (7, 8) ein paralleles oder im Wesentlichen paralleles und auf den durch den Mess- und/oder Aufnahmebereich (4) bewegten Behälter (2) gerichtetes Licht (9.2, 16.2) erzeugt, und wobei unter Verwendung des parallelen Lichtes (9.2, 16.2) der wenigstens einen Licht aussendenden Einrichtung (7, 8) auf einem Bildschirm (18) ein Schattenbild des jeweiligen Behälters (2) zur Aufnahme mit dem opto-elektrischen Empfänger (11, 20) oder mit einer opto-elektrischen Kamera, beispielsweise mit einer CCD-Kamera erzeugt wird, **gekennzeichnet durch**
die Verwendung eines Bildschirms (18), der eine Durchlasscharakteristik in der Form aufweist, dass er nur für ein in einer vorgegebenen Richtung auftreffendes Licht, beispielsweise nur für senkrecht auftreffendes Licht durchlässig ist, wobei bei der Erfassung des Kantenprofils eines jeden Behälters (2) im Strahlengang des Lichtes der wenigstens einen Licht aussendenden Einrichtung (7, 8) Filter (12, 13, 14) angeordnet sind, und wobei der Spektralbereich des Lichtes der wenigstens einen Licht aussendenden Einrichtung (7, 8) sowie die im Strahlengang angeordneten Filter oder deren Durchlasscharakteristik wenigstens einmal synchron geändert werden.

2. Verfahren nach Anspruch 1, **dadurch gekennzeichnet, dass** die Aufnahme des am Bildschirm (18) erzeugten Bildes ohne Farb- und Grauwerte erfolgt.

3. Verfahren nach Anspruch 1 oder 2, **dadurch gekennzeichnet, dass** das Licht mehrerer Einzellichtquellen (22) mit unterschiedlichem Lichtspektrum über eine optische Einrichtung (23) in einen Brennpunkt eines das parallele Licht (9.2, 16.2) erzeugenden Linsensystems eingekoppelt wird.

4. Vorrichtung zur Erfassung des Kantenprofils von Flaschen oder dergleichen Behältern (2), mit wenigstens einem opto-elektrischen Empfänger (11, 20) an einer Seite eines Mess- und/oder Aufnahmebereichs, durch den die Behälter (2) auf einem Transporteur (4) bewegt werden, und mit wenigstens einer Licht aussendenden Einrichtung (7, 8), die an dem Mess- und/oder Aufnahmebereich (4) dem Empfänger (11) gegenüberliegend angeordnet ist, wobei die wenigstens eine Licht aussendende Einrichtung (7, 8) zur Erzeugung eines parallelen oder im Wesentlichen parallelen, den Mess- und/oder Aufnahmebereich (4) durchdringenden und auf den wenigstens einen Empfänger (11) gerichteten Lichtes (9.2, 16.2) ausgebildet ist, und wobei der wenigstens eine opto-elektrische Empfänger (11, 20) im Strahlengang auf einen Bildschirm (18) folgend angeordnet ist, auf dem unter Verwendung des parallelen Lichtes (9.2, 16.2) der wenigstens einen Licht aussendenden Einrichtung (7, 8) ein Schattenbild des jeweiligen Behälters (2) erzeugt wird,
**dadurch gekennzeichnet,**
**dass** der Bildschirm (18) eine Durchlasscharakteristik in der Form aufweist, dass er nur für ein in einer vorgegebenen Richtung auftreffendes Licht, beispielsweise nur für senkrecht auftreffendes Licht durchlässig ist, dass die wenigstens eine Licht aussendende Einrichtung (7, 8) mit wenigstens einer Lichtquelle (7.1, 8.1) zur Abgabe eines im Spektrum veränderbaren Lichtes (9, 16) ausgebildet ist und in deren Strahlengang Filter (12, 13, 14) angeordnete sind, dass die Vorrichtung bei der Erfassung des Kantenprofils eines jeden Behälters (2) zur wenigstens einmal synchronen Änderung des Spektralbereichs des Lichtes der wenigstens einen Licht aussendenden Einrichtung (7, 8) sowie der im Strahlengang angeordneten Filter oder deren Durchlasscharakteristik ausgebildet ist.

5. Vorrichtung nach Anspruch 4, **dadurch gekennzeichnet, dass** der opto-elektrische Empfänger (11, 20) für die Aufnahme des am Bildschirm (18) erzeugten Bildes ohne Farb- und Grauwerte ausgebildet ist.

6. Vorrichtung nach Anspruch 5, **dadurch gekennzeichnet, dass** die wenigstens eine Licht aussendende Einrichtung (7, 8) zumindest eine punktförmige oder im Wesentlichen punktförmige Lichtquelle (7.1, 8.1) sowie wenigstens ein Linsensystem (10), beispielsweise in Form einer Fresnel-Linse zur Erzeugung des parallelen Lichtes (9.2, 16.2) aufweist.

7. Vorrichtung nach Anspruch 6, **dadurch gekennzeichnet, dass** die wenigstens eine Lichtquelle (7.1, 8.1) von mehreren Einzellichtquellen (22) mit unterschiedlichem Lichtspektrum gebildet ist, deren Licht mit Hilfe einer Optik, beispielsweise mit Hilfe einer Faseroptik (23) zu einer punktförmigen Lichtquelle (7.1, 8.1) zusammengefasst ist.

8. Vorrichtung nach einem der Ansprüche 4 - 7, **dadurch gekennzeichnet, dass** im Strahlengang des Lichtes der wenigstens einen Licht aussendenden Einrichtung (7, 8) optische Filter (12, 13, 14) angeordnet sind, die in ihrer Filter- oder Durchlasscharakteristik an das Lichtspektrum der Licht aussendenden Einrichtung (7, 8) anpassbar sind.

9. Vorrichtung nach einem der Ansprüche 4 - 8, **dadurch gekennzeichnet, dass** zur gesonderten Erfassung des Kantenprofils wenigstens zweier Bereiche der Behälter (2) zumindest zwei gesonderte Licht aussende Einrichtungen (7, 8) und/oder wenigstens zwei opto-elektrische Empfänger (11, 20) vorgesehen sind.

## Claims

1. Method for detecting the edge profile of bottles or similar containers (2) that are moved past a measuring and/or receiving region (4) of a measuring and/or receiving system, using at least one opto-electric receiver (11, 20) on one side of the measuring and/or receiving region (4) and using at least one light-emitting device (7, 8) which is on the side located opposite the receiver (11) in the measuring and/or receiving region (4) and which comprises at least one light source (7.1, 8.1) for emitting a light (9,16) which is variable in spectrum, with the at least one light-emitting device (7, 8) generating a parallel or essentially parallel light (9.2, 16.2) directed at the container (2) which is moved through the measuring and/or receiving region (4), and whereby, using the parallel light (9.2, 16.2) of the at least one light-emitting device (7, 8), a silhouette of the respective container (2) is generated on a screen (18) for recording with the opto-electric receiver (11, 20) or with an opto-electric camera, for example with a CCD camera, **characterised by** the use of a screen (18) which comprises a permeability characteristic such that it is only permeable for a light impinging on it in a given direction, for example only for vertically impinging light, there being filters (12, 13, 14) arranged in the optical path of the light of the at least one light-emitting device (7, 8) during the detecting of the edge profile of each container (2), and with the spectral range of the light of the at least one light-emitting device (7, 8) as well as the filters arranged in the optical path, or their permeability characteristic, being synchronously changed at least once.

2. Method of claim 1 **characterised in that** the recording of the image generated on the screen (18) is effected without hues and grey values.

3. Method of claim 1 or 2 **characterised in that** the light of a plurality of individual light sources (22) having different light spectra is coupled by an optical device (23) into a focal point of a lens system generating the parallel light (9.2, 16.2).

4. Device for detecting the edge profile of bottles or similar containers (2), having at least one opto-electric receiver (11, 20) on one side of a measuring and/or receiving region through which the containers (2) are moved on a transporter (4), and having at least one light-emitting device (7, 8) on the side located opposite the receiver (11) in the measuring and/or receiving region (4), whereby
the at least one light-emitting device (7, 8) is configured to generate a parallel or essentially parallel light (9.2,16.2) penetrating the measuring and/or receiving region (4) and directed at the at least one receiver (11), and whereby
in the beam path the at least one opto-electric receiver (11, 20) is arranged downstream of a screen (18) on which a silhouette of the respective container (2) is generated using the parallel light (9.2, 16.2) of the at least one light-emitting device (7, 8),
**characterised in that**
the screen (18) comprises a permeability characteristic such that it is only permeable for a light impinging on it in a given direction, for example only for vertically impinging light, **in that** the at least one light-emitting device (7, 8) is configured with at least one light source (7.1, 8.1) for emitting a light (9, 16) variable in spectrum and in whose beam path filters (12, 13, 14) are arranged, and **in that** the device, when detecting the edge profile of each container (2), is configured such that the spectral range of the light of the least one light-emitting device (7, 8) and of the filters arranged in the beam path or their permeability characteristic are synchronously chanted at least once.

5. Device of claim 4, **characterised in that** the opto-electric receiver (11, 20) is configured to record the image generated on the screen (18) without hues or grey tones.

6. Device of claim 5, **characterised in that** the at least one light-emitting device (7, 8) comprises at least one punctiform or essentially punctiform light source (7.1, 8.1) as well as at least one lens system (10), for example in the form of a Fresnel lens, for generating the parallel light (9.2, 16.2).

7. Device of claim 6, **characterised in that** the at least one light source (7.1, 8.1) is formed from a plurality of individual light sources (22) having a different light spectrum, whose light is combined to a punctiform light source (7.1, 8.1) with the aid of an optic, for example with the aid of a fibre optic (23).

8. Device of any one of claims 4 - 7, **characterised in that** optical filters (12, 13, 14) which in their filter characteristic or permeability characteristic can be adapted to the light spectrum of the light-emitting device (7, 8) are arranged in the beam path of the light of the at least one light-emitting device (7, 8).

9. Device of any one of claims 4 - 8, **characterised in that** at least two separate light-emitting devices (7, 8) and/or at least two opto-electric receivers (11,20) are provided for the separate detecting of the edge profile of at least two regions of the containers (2).

## Revendications

1. Procédé servant à détecter le profil de bord de bouteilles ou de contenants (2) similaires, qui sont déplacés le long d'une zone de mesure et/ou d'enregistrement (4) d'un système de mesure et/ou d'enregistrement, en utilisant au moins un récepteur (11, 20) optoélectrique au niveau d'un côté de la zone de mesure et/ou d'enregistrement (4) et en utilisant au moins un système (7, 8) émettant de la lumière, agencé en vis-à-vis du récepteur (11) au niveau de la zone de mesure et/ou d'enregistrement (4), avec au moins une source de lumière (7.1, 8.1) servant à diffuser une lumière (9, 16) à spectre variable, dans lequel
l'au moins un système (7, 8) émettant de la lumière génère une lumière (9.2, 16.2) parallèle ou sensiblement parallèle et dirigée sur le contenant (2) déplacé à travers la zone de mesure et/ou d'enregistrement (4), et dans lequel une ombre du contenant (2) respectif destiné à être enregistrée avec le récepteur (11, 20) optoélectrique ou avec une caméra optoélectrique, par exemple avec une caméra CCD est générée sur un écran (18) en utilisant la lumière (9.2, 16.2) parallèle de l'au moins un système (7, 8) émettant de la lumière, **caractérisé par**
l'utilisation d'un écran (18), qui présente une caractéristique de perméabilité se présentant sous la forme telle qu'il ne laisse passer qu'une lumière incidente dans une direction prédéfinie, par exemple qu'une lumière incidente de manière perpendiculaire, dans lequel des filtres (12, 13, 14) sont disposés lors de la détection du profil de bord d'un contenant (2) respectif dans le chemin optique de la lumière de l'au moins un système (7, 8) émettant de la lumière, et dans lequel la plage spectrale de la lumière de l'au moins un système (7, 8) émettant de la lumière ainsi que les filtres disposés dans le chemin optique ou leur caractéristique de perméabilité sont modifiés au moins une fois de manière synchrone.

2. Procédé selon la revendication 1, **caractérisé en ce que** l'enregistrement de l'image générée au niveau de l'écran (18) est effectué sans nuances de couleurs et de gris.

3. Procédé selon la revendication 1 ou 2, **caractérisé en ce que** la lumière de plusieurs sources de lumière individuelles (22) avec un spectre de lumière différent est injectée par l'intermédiaire d'un système (23) optique dans un point focal d'un système de lentilles générant la lumière (9.2, 16.2) parallèle.

4. Dispositif servant à détecter le profil de bord de bouteilles ou de contenants (2) similaires, avec au moins un récepteur (11, 20) optoélectrique au niveau d'un côté d'une zone de mesure et/ou d'enregistrement, à travers laquelle les contenants (2) sont déplacés sur un transporteur (4), et avec au moins un système (7, 8) émettant de la lumière, qui est disposé au niveau de la zone de mesure et/ou d'enregistrement (4) en vis-à-vis du récepteur (11), dans lequel
l'au moins un système (7, 8) émettant de la lumière est réalisé pour générer une lumière (9.2, 16.2) parallèle ou sensiblement parallèle, traversant la zone de mesure et/ou d'enregistrement (4) et dirigée sur l'au moins un récepteur (11), et dans lequel
l'au moins un récepteur (11, 20) optoélectrique est disposé dans le chemin optique à la suite d'un écran (18), sur lequel une ombre du contenant (2) respectif est générée en utilisant la lumière (9.2, 16.2) parallèle de l'au moins un système (7, 8) émettant de la lumière,
**caractérisé en ce**
**que** l'écran (18) présente une caractéristique de perméabilité sous la forme telle qu'il laisse passer seulement une lumière incidente dans une direction prédéfinie, par exemple seulement une lumière incidente de manière perpendiculaire, que l'au moins un système (7, 8) émettant de la lumière avec au moins une source de lumière (7.1, 8.1) est réalisé pour diffuser une lumière (9, 16) à spectre variable et des filtres (12, 13, 14) sont disposés dans son chemin optique, que le dispositif est réalisé lors de la détection du profil de bord d'un contenant (2) respectif pour modifier au moins une fois de manière synchrone la plage spectrale de la lumière de l'au moins un système (7, 8) émettant de la lumière ainsi que les filtres disposés dans le chemin optique ou leur caractéristique de perméabilité.

5. Dispositif selon la revendication 4, **caractérisé en ce que** le récepteur (11, 20) optoélectrique est réalisé pour la prise de l'image générée au niveau de l'écran (18) sans nuances de couleurs et de gris.

6. Dispositif selon la revendication 5, **caractérisé en ce que** l'au moins un système (7, 8) émettant de la lumière présente au moins une source de lumière (7.1, 8.1) ponctuelle ou sensiblement ponctuelle ainsi qu'au moins un système de lentilles (10), par exemple sous la forme d'une lentille de Fresnel pour générer la lumière (9.2, 16.2) parallèle.

7. Dispositif selon la revendication 6, **caractérisé en ce que** l'au moins une source de lumière (7.1, 8.1) est formée par plusieurs sources de lumière individuelles (22) avec un spectre de lumière différent, dont la lumière est regroupée à l'aide d'une optique, par exemple à l'aide d'une fibre optique (23) en une source de lumière (7.1, 8.1) ponctuelle.

8. Dispositif selon l'une quelconque des revendications 4 - 7, **caractérisé en ce que** des filtres (12, 13, 14) optiques sont disposés dans le chemin optique de la lumière de l'au moins un système (7, 8) émettant de la lumière, dont la caractéristique de filtre ou de perméabilité peut être adaptée au spectre de lumière du système (7, 8) émettant de la lumière.

9. Dispositif selon l'une quelconque des revendications 4 - 8, **caractérisé en ce qu'**au moins deux systèmes (7, 8) émettant une lumière séparée et/ou au moins deux récepteurs (11, 20) optoélectriques sont prévus pour détecter séparément le profil de bord d'au moins deux zones des contenants (2).
